# EUROPÄISCHE PATENTSCHRIFT

(11) **EP 0 547 192 B1**
(45) Veröffentlichungstag und Bekanntmachung des Hinweises auf die Patenterteilung: **20.12.1995**
(21) Anmeldenummer: 92912760.3
(22) Anmeldetag: 02.07.1992
(51) Int. Cl.: F24F 3/044, F24F 12/00, F24F 13/00

(54) **ENERGIE- UND RAUMSPARENDER MONOBLOCK-KLIMASCHRANK MIT INTEGRIERBARER WÄRMERÜCKGEWINNUNG ZUR KONDITIONIERUNG VON RAUMLUFT**
ENERGY AND SPACE SAVING SINGLE-UNIT AIR CONDITIONER FOR PROCESSING ROOM AIR, WITH INTEGRABLE HEAT RECOVERY
ARMOIRE MONOBLOC DE CLIMATISATION COMPACTE ET CONSOMMANT PEU D'ENERGIE A RECUPERATION THERMIQUE INTEGREE UTILE POUR CONDITIONNER L'AIR AMBIANT

(30) Priorität: 09.07.1991 CH 2027/91
(43) Veröffentlichungstag der Anmeldung: 23.06.1993
(73) Patentinhaber: SIEGRIST, Urs, 3006 Bern (CH)
(72) Erfinder: SIEGRIST, Urs, 3006 Bern (CH)
(74) Vertreter: White, William
(86) Internationale Anmeldenummer: CH9200134
(87) Internationale Veröffentlichungsnummer: WO9301451

(56) Entgegenhaltungen:
- DE-A- 2 306 209
- FR-A- 2 311 268
- US-A- 3 698 472
- US-A- 4 967 830

## Beschreibung

Die vorliegende Erfindung betrifft einen energie- und raumsparenden Monoblock-Klimaschrank mit integrierbarer Wärmerückgewinnung zur Konditionierung von Raumluft gemäss dem Oberbegriff des Patentanspruchs 1 (siehe z.B. DE-A-2 306 209).

Monoblock-Klimaanlagen für die Aufbereitung von Raumluft sind bekannt. Sie basieren in der Regel auf einer modularen Gehäusekonstruktion aus Profilen und doppelwandigen Stahlpaneelejn mit dazwischenliegender Wärmeisolation, in die die diversen Anlagebestandteile eingebaut sind. Dabei werden üblicherweise die Zu- und die Abluftströme übereinander geführt. Die Grösse der Gehäuse und insbesondere die Querschnitte der einzelnen darin eingebauten Elemente der Klimaanlage wird in Abhängigkeit der Luftmenge bestimmt, die die einzelnen ebenen Anlageteile wie Luftfilter, -erhitzer und -kühler bei vorgeschriebener Geschwindigkeit durchströmen muss, um die gewünschte Wirkung zu erreichen. Diese Geschwindigkeit liegt gemäss heutigen Vorschriften bei 2 bis 3 m/s, wobei die Tendenz dahin geht, sie aus Energiespargründen zu verringern. Da die einzelnen Anlageteile nebeneinander angeordnet sind erfolgen die einzelnen Konditionierungen der Luft, wie z.B. Filtrierung, Erwärmung, Wärmerückgewinnung, Kühlung und Befeuchtung horizontal nacheinander. Dies führt zu riesigen Schränken, resp. zu Anlagen, die sehr viel Grundfläche beanspruchen, z.B. 6 x 1 m für eine Anlage mit einem Durchsatz von 3500 m³ Luft pro Stunde. Dazu kommen beidseitig die Kanalanschlüsse von je ca. 1 m Länge. In der Breite muss zudem ein Serviceraum von ungefähr 1 m vorgesehen werden. Aufgrund der Länge der Anlage und der Anordnung und Konstruktion der einzelnen Elemente in einer solchen Klimaanlage ergibt sich ein interner Druckverlust von ca. 400 - 500 Pascal. Zu diesem internen Druckverlust kommt ein äusserer Druckverlust, bedingt durch die Kanalsysteme und Armaturen, der in der Grössenordnung von 600 - 800 Pascal liegt, derart, dass eine derartige Klimaanlage zu ihrem Betrieb Radialventilatoren mit separaten Motoren und Keilriemenantrieb benötigt. Ein solcher Ventilator beansprucht aber ebenfalls viel Raum und kommt mit allen notwendigen Zusätzen teuer zu stehen. Er ist zudem störungsanfällig und braucht viel Energie und Wartung. Um zu vermeiden, dass die Servicearbeiten bei einer derartigen Klimaanlage auf den Knien durchgeführt werden müssen, muss sie auf einen Stahlrohrgrundrahmen montiert werden, was ihren Preis weiter erhöht.

Der vorliegenden Erfindung liegt die Aufgabe zugrunde, einen Monoblock-Klimaschrank vorzuschlagen, der diese und weitere Nachteile der bekannten Monoblok-Klimaanlagen vermeidet und der sich in jeder Beziehung, insbesondere bezüglich seines Wirkungsgrades, dem internen Druckverlust und der Wärmerückgewinnung vorteilhaft vom Stand der Technik unterscheidet.

Erfindungsgemäss wird diese Aufgabe durch einen Monoblock-Klimaschrank gelöst, wie er im Patentanspruch 1 definiert ist.

Der Fachmann erkennt dabei, dass der Erfindung einerseits die Idee zugrunde liegt, die Luftführung nicht mehr horizontal übereinander, sondern vertikal nebeneinander anzuordnen und die nebeneinander angeordneten ebenen Konditionierungselemente im wesentlichen durch zylindrische und ineinander angeordnete Konditionierungselemente zu ersetzen. Dadurch können, bezogen auf die Gehäusegrundfläche, der wirksame Querschnitt eines jeden Konditionierungselementes - mit Ausnahme des Wärmerückgewinnungselementes - um den Faktor π, oder ca. 3, erhöht und gleichzeitig die Durchströmungsgeschwindigkeit sowie der interne Druckverlust wesentlich verkleinert werden. Messungen haben ergeben, dass bei einem erfindungsgemässen Monoblock-Klimaschrank die Nettogeschwindigkeit durch das Gerät bei nur noch ca. 1,5 m/s anstelle der üblichen 2,5 3,0 m/s beträgt, wobei nur das Wärmerückgewinnungselement mit dieser Geschwindigkeit durchströmt wird, wogegen die Durchströmgeschwindigkeit bei den anderen Konditionierungselementen bei lediglich 0,6 - 1,2 m/s liegt. Der Platzbedarf eines erfindungsgemässen Monoblock-Klimaschrankes mit vorgegebener Luftleistung liegt dabei ebenfalls bei ungefähr einem Drittel bezogen zu jenem einer herkömmlicher Anlage mit vergleichbaren Werten. Auch der Energiekonsum eines erfindungsgemässen Monoblock-Klimaschrankes ist merklich niedriger als jener einer vergleichbaren Klimaanlage herkömmlicher Monoblock-Bauart, da der interne Druckverlust dank der geringen Durchströmgeschwindigkeit der Konditionierungselemente niedriger ist.

Weitere Eigenschaften und Vorteile eines erfindungsgemässen Monoblock-Klimaschrankes ergeben sich aus der nachfolgenden Beschreibung einer vorteilhaften Ausführungsvariante anhand der Zeichnung. In dieser zeigt
Fig. 1 eine schematische Seitenansicht einer konventionellen Klimaanlage in Monoblock-Bauart ohne Seitenwand,
Fig. 2 eine schematische Seitenansicht eines entsprechenden erfindungsgemässen Monoblock-Klimaschrankes ohne Seitenwand,
Fig. 3 schematische perspektivische Darstellungen herkömmlicher und erfindungsgemässer Konditionierungselemente, hier ein Luftfilter, im direkten Vergleich,
Fig. 4 eine Seitenansicht, teilweise geschnitten, einer Konditionierungselemente-Einheit gemäss der Erfindung, und
Fig. 5 einen Längsschnitt durch ein Wärmerückgewinnungselement, wie es vorteilhafterweise in einem erfindungsgemässen Monoblock-Klimaschrank verwendet wird.

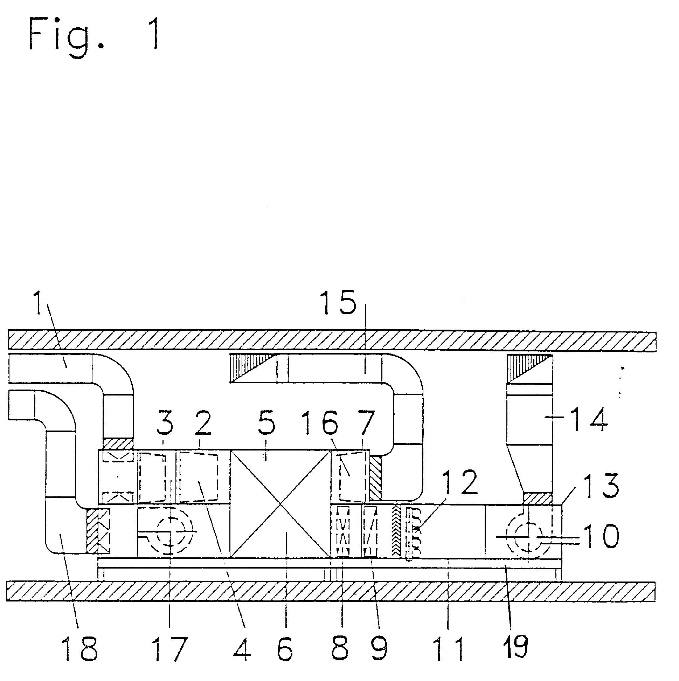

Der Fachmann erkennt in Fig. 1 den prinzipiellen Aufbau einer konventionalen Monoblock-Klimaanlage, bei der mehrere, hier fünf, Gehäuse-Einheiten mit je einem Konditionierungselement hintereinander in horizontaler Anordnung zusammengebaut sind. Bei dieser Klimaanlage wird durch einen Aussenluftkanal 1 Aussenluft in Pfeilrichtung in den oberen Teil eines ersten Gehäuses 2, in dem Luftfilter 3 und 4 für die Grob- und Feinfiltrierung untergebracht sind, eingeblasen. Nach dem Durchströmen der Luftfilter 3 und 4 strömt die Luft in und durch ein zweites Gehäuse 5, in dem ein Wärmerückgewinnungselement 6 untergebracht ist zu einem dritten Gehäuse 7, in dessen unteren Teil ein Lufterhitzer 8 und ein Luftkühler 9 untergebracht sind. Von da strömt die von einem Zuluftventilator 10 angesaugte Luft über eine sich in einem vierten Gehäuse 11 befindliche Befeuchtungseinrichtung 12, bevor sie durch das fünfte Gehäuse 13, in dem sich der Zuluftventilator 10 befindet, den Zuluftkanal 14 erreicht, der die Luft zu den zu klimatisierenden Räumen bringt.

Die aus den zu klimatisierenden Räumen zurückströmende Abluft erreicht die Klimaanlage in Pfeilrichtung durch einen Abluftkanal 15, der in den oberen Teil des dritten Gehäuses 7 mündet, wo ein weiterer Luftfilter 16 untergebracht ist. Nach dem Durchströmen desselben wird die Abluft mittels eines Fortluftventilators 17 erneut über das Wärmerückgewinnungselement 6 zum unteren Teil des ersten Gehäuses 2 gesaugt, um über einen Fortluftkanal 18 ins Freie geblasen zu werden. Um zu verhindern, dass die regelmässig notwendigen Service- und Revisionsarbeiten an dieser Klimaanlage auf den Knien vorgenommen werden müssen, sind die fünf Gehäuse 2, 5, 7, 11 und 13 vorteilhafterweise auf einen Sockelrahmen 19 montiert.

Eine derartige konventionelle Monoblock-Klimaanlage mit einer Nennleistung von 3'500 m³ Luftdurchsatz pro Stunde beansprucht typischerweise 6,4 x 1,0 m Grundfläche, zu welchem in der ganzen Länge noch ein ca 1 m breiter Revisionsplatz vorgesehen werden muss. Sie umschliesst ein Volumen von ca 36,6 m³ und weist eine Gehäuseoberfläche von ungefähr 34 m² auf. Bei Nennleistung strömt die Luft mit ca 2,5 m/s durch diese Klimaanlage, wobei ein innerer Druckverlust von ca 400 Pascal überwunden werden muss.

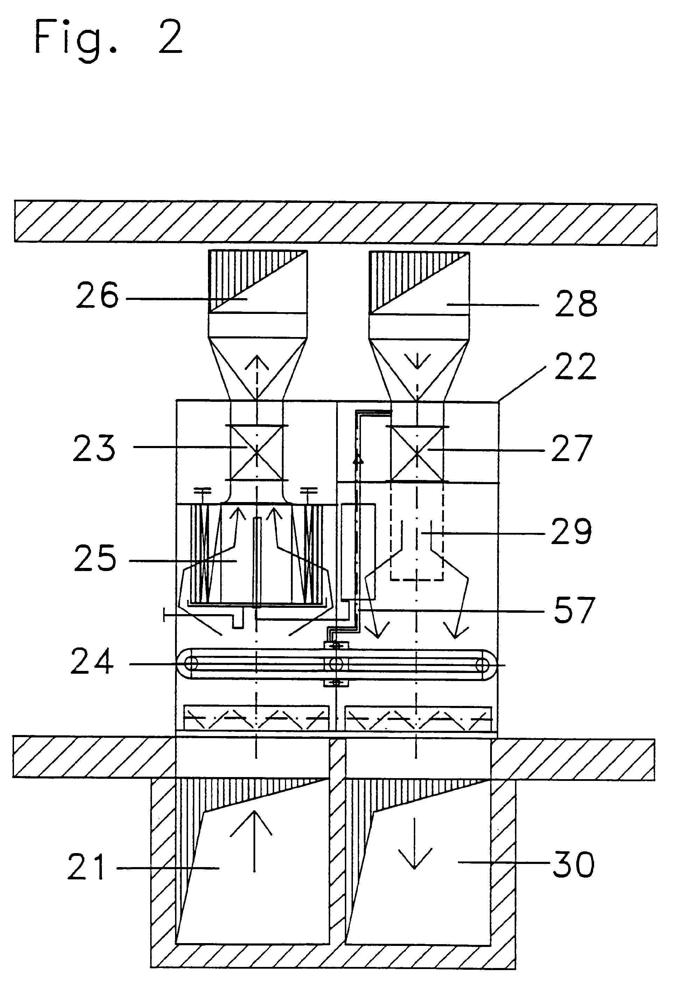

In Fig. 2 ist schematisch ein Monoblock-Klimaschrank gemäss der vorliegenden Erfindung dargestellt, der ebenfalls eine Nennleistung von 3'500 m³/h aufweist. Man erkennt, dass der Schrank 22 durch die Luft in vertikaler Richtung durchströmt wird, da die Aussenluft beispielsweise durch einen Aussenluftbodenkanal 21 in Pfeilrichtung von unten her mittels einem im Monoblock-Klimaschrank oben angeordneten Zuluftventilator 23, vorteilhafterweise in sogenannter RADAX-Bauweise (Axialventilator mit Radialventilatorcharakteristik) angesaugt wird. Nach dem Einströmen in den Schrank 22 durchfliesst die Aussenluft, wenn gewünscht, ein Wärmerückgewinnungsband 24, dessen Aufbau und Funktion weiter unten beschrieben sein wird, bevor sie über einen Konditionierungszylinder 25, dessen Aufbau ebenfalls weiter unten beschrieben sein wird, in den Zuluftventilator 23 gelangt, von wo aus sie in Pfeilrichtung oben aus dem Schrank 22 hinaus über einen Zuluftkanal 26 in die zu klimatisierenden Räume geblasen wird.

Aus diesen Räumen kehrt die Abluft, durch einen Abluftventilator 27, ebenfalls vorteilhafterweise in RADAX-Bauweise, in Pfeilrichtung von oben her über einen Abluftkanal 28 in den Schrank 22 zurück. Notwendigenfalls über einen Verteilzylinder 29 aus Lochblech mit zumindest annähernd zylindrischem Querschnitt wird die Abluft erneut über das Wärmerückgewinnungsband 24 beispielsweise in einen Fortluftbodenkanal 30 geblasen.

Für den Fachmann ergibt sich aus obiger Beschreibung eines erfindungsgemässen Monoblock-Klimaschrankes automatisch, dass der Schrank 22 in vertikaler Richtung unterteilt sein muss, um den Zuluftstrom und den Abluftstrom separat leiten zu können. Diese Trennung wird vorteilhafterweise durch eine isolierte Trennwand 31 erreicht, in der eine in der Zeichnung nicht dargestellte Umluft-Bypass-Klappe vorgesehen werden kann.

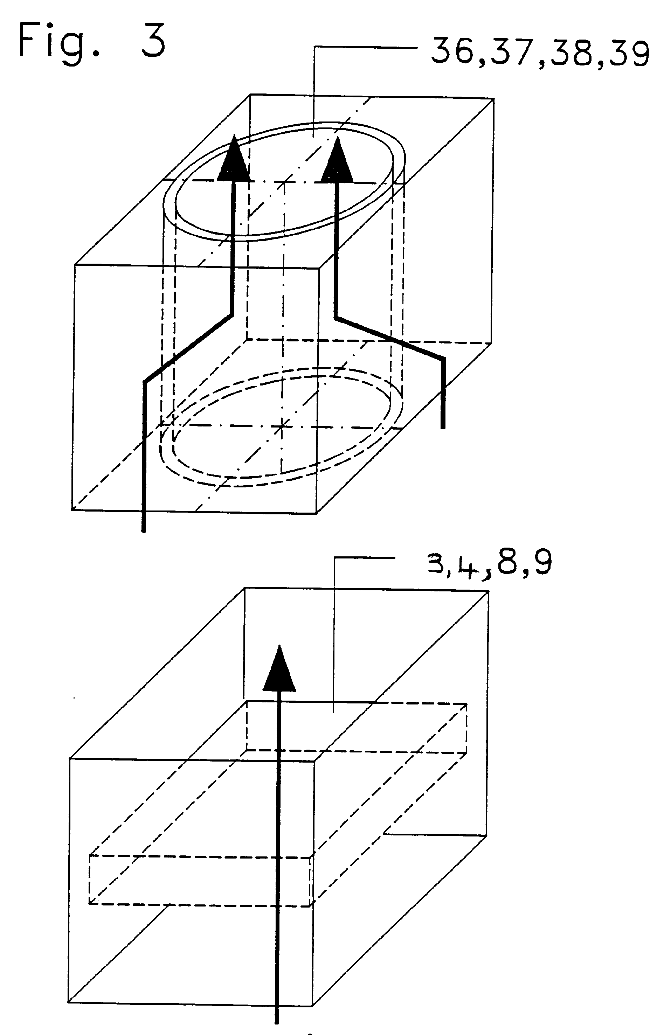

In Fig. 3 sind einerseits konventionelle Wärmetauscher 8 und 9 und ebensolche Luftfilter 3, 4 und andererseits entsprechende im erfindungsgemässen Monoblock-Klimaschrank als Teil des Konditionierungszylinders verwendete Elemente dargestellt. Bei ersterem entspricht die aktive Filterfläche maximal demm Querschnitt des Gehäuses, in das er eingebaut ist. Bei letzterem beträgt die aktive Filterfläche aufgrund seiner zumindest annähernd zylindrischen Formgebung und der Tatsache, dass die Luft den Zylinder von aussen nach innen durchströmt, der Oberfläche des im Gehäusequerschnitt unterbringbaren Zylinders, d.h. sie ist, bei würfeligem Gehäuse, ungefähr drei mal grösser als bei jenem.

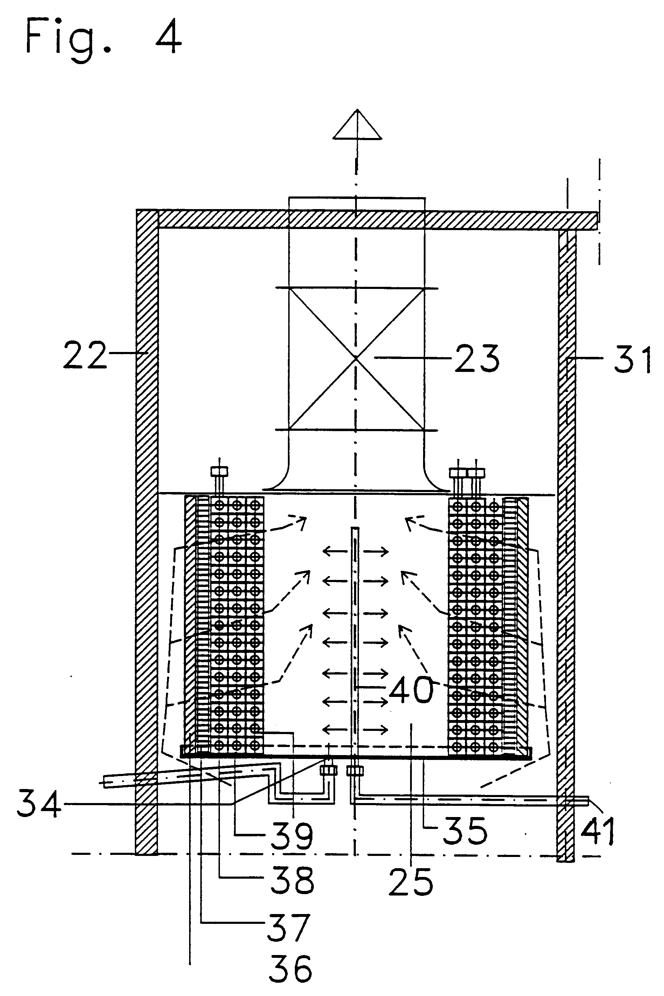

In Fig. 4 ist ein Konditionierungszylinder 25, wie er in einem erfindungsgemässen Monoblock-Klimaschrank werwendet wird im partiellen Schnitt von der Seite dargestellt. Wie anhand von Fig. 3 erläutert, handelt es sich dabei um ein zumindest zylinderähnliches Element oder vorteilhafterweise einen Zylinder, der einseitig durch einen als Tropfwanne 35 mit Ablauf 34 wirkenden geschlossenen Boden aufweist, der im Schrank 22 (Fig. 2) den Zylinder nach unten hin verschliesst. Dadurch wird die durch den oberhalb des Konditionierungszylinders 25 als Deckel auf diesen aufgesetzten Zuluftventilator 23 angesaugte Aussenluft in Pfeilrichtung von aussen nach innen in den Konditionierungszylinder 25 eingesaugt. Dabei durchströmt sie mehrere von zylindrisch in Schichten von aussen nach innen am Konditionierungszylinder 25 angeordnete Konditionierungselemente, wie einen Vorfilter 36, einen Feinfilter 37, einen Lufterhitzer 38 und eine Luftkühler 39. Bei Bedarf kann im Konditionierungszylinder 25 zentral ein Dampfrohr 40 angeordnet sein, über das über eine Dampfzufuhr 41 zugeführter Dampf der Zuluft beigemischt werden kann.

Der Fachmann erkennt, dass im erfindungsgemässen Monoblock-Klimaschrank aufgrund der gegenüber herkömmlichen Klimaanlagen wesentlich vergrösserten aktiven Flächen der diversen Klimatisierungselemente wie Filter 36, 37, Lufterhitzer und kühler 38, 39 die Strömungsgeschwindigkeit der Luft bei gleicher Stundenleistung wesentlich verringert und der Druckabfall ebenfalls wesentlich kleiner ist. Damit können ein Lufterhitzer 38 und ein Luftkühler 39 zum Einsatz kommen, die ungefähr 50% weniger Rohre aufweisen als in einer vergleichbaren herkömmlichen Klimaanlage. Der gegenüber herkömmlichen Klimaanlagen wesentlich reduzierte Druckverlust im erfindungsgemässen Monoblock-Klimaschrank ermöglicht zudem erstmals die leistungsmässig optimale Verwendung von RADAX-Ventilatoren, die gegenüber herkömmlichen Ventilatoren einen hohen Wirkungsgrad aufweisen und wesentlich weniger Strom verbrauchen und ohne Keilriemen oder andere aufwendige Konstruktionsmittel und Steuerungen einfach und wirkungsvoll steuer- und einsetzbar sind. Die Ausgestaltung der Konditionierungselemente in Form eines Konditionierungszylinders 25 und die Möglichkeit der Verwendung von RADAX-Ventilatoren 23, 30 bieten weiter den Vorteil, dass sämtliche Regulierungs-, Steuerungs- und Überwachungseinrichtungen des Monoblock-Klimaschrankes an der Innenseite der Türe des Abluftteiles (in der Zeichnung nicht dargestellt) montiert werden können. Neben den Ventilatoren bleibt auch noch genügend Freiraum, um notwendigenfalls weitere Komponenten, wie z.B. Dampferzeuger, in den Monoblock-Klimaschrank einzubauen.

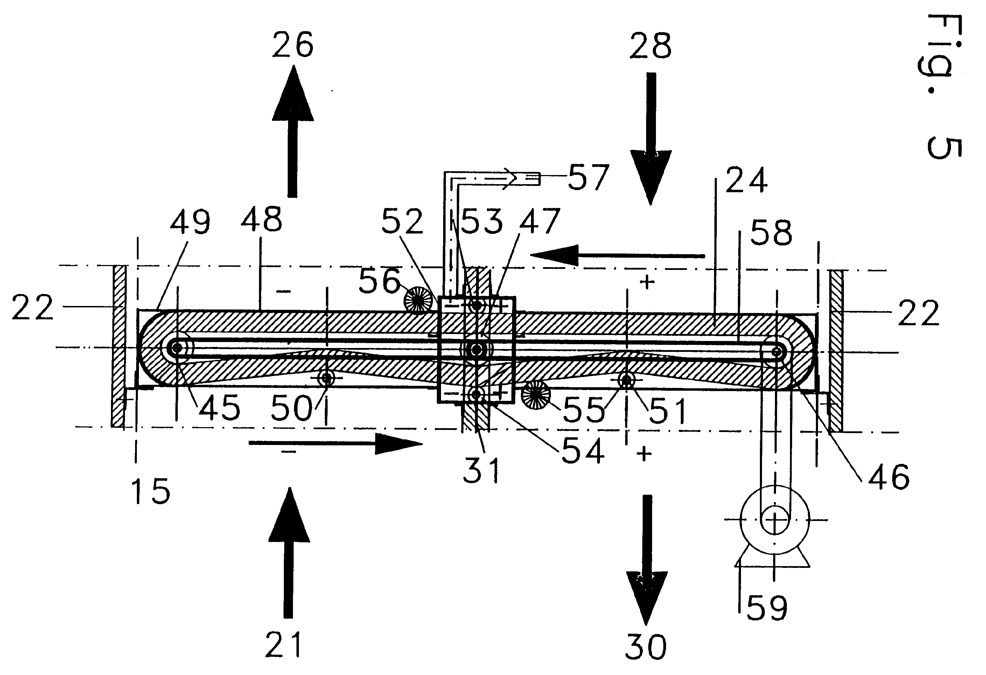

Der hiervor beschriebene erfindungsgemässe Monoblock-Klimaschrank wird vorteilhafterweise mit einem Wärmerückgewinnungselement in Form eines Wärmerückgewinnungsbandes 24 gemäss Fig. 5 versehen. Dabei handelt es sich vorteilhafterweise im wesentlichen um ein vorteilhafterweise aus Kupfer- oder Aluminiumdrähten gesponnenes mehrschichtiges oder aus Spänen gebildetes Band, das einerseits unterhalb des Konditionierungszylinders 25 des Aussenluftteiles und andererseits unterhalb eines eventuellen Verteilzylinders 29 im Abluftteil angeordnet ist und über Rollen 45, 46 und 47 in Pfeilrichtung von der Zuluftseite des Monoblock-Klimaschrankes in die Abluftseite um umgekehrt bewegt wird. Dies führt dazu, dass die in Pfeilrichtung von unten unten in den Schrank 22 einströmende kalte Aussenluft vor dem Durchströmen des Konditionierungszylinders 25 zweimal durch das sich bewegende Wärmerückgewinnungsband 24 hindurch strömt und dabei in zwei Schritten erwärmt wird. Auf der anderen Seite, vor dem Verlassen des Schrankes 22 in Pfeilrichtung, wird die warme Abluft ebenfalls zweimal durch das Wärmerückgewinnungsband 24 geleitet und dadurch abgekühlt. Dadurch wird ein sehr hoher Wärmerückgewinnungs-Wirkungsgrad von 70 - 80% erreicht, der es ermöglicht, den Lufterhitzer 38 und den Luftkühler 39 entsprechend noch einmal kleiner zu dimensionieren als dies aufgrund der verringerten Luftströmungsgeschwindigkeit schon möglich ist.

Gemäss Fig. 5 können die Rollen 45, 46 und 47, sowie bei grösseren Monoblock-Klimaschrank-Typen weitere Rollen, des Wärmerückgewinnungsbandes 24 auf einer Stahlblechkonstruktion 48 befestigt und das Wärmerückgewinnungsband 24 in einem Stahlblechteil 49 eingefasst sein. Um das Wärmerückgewinnungsband 24 stets unter gewünschter Spannung halten zu können, können zwei oder mehrere verstellbare Spannrollen 50 und 51 vorgesehen werden.

Um zu verhindern, dass zwischen dem Zuluftteil des Schrankes 22 und dem Abluftteil desselben im Bereich, in dem das Wärmerückgewinnungsband 24 von einem Teil in den anderen und zurück verläuft unnötig viel Luft zirkuliert und dadurch Energie verloren geht oder falsche Luft überströmt, ist es vorteilhaft, die Trennwand 31 an dieser Stelle beispielsweise durch eine Konstruktion zu ersetzen, wie sie sich aus Fig. 5 ergibt. Es kann sich dabei um ein kastenförmig gebogenes Stahlblechteil 52 handeln, in dem über und unterhalb der Rolle 47 je eine Dichtungs- und Führungsrolle 53 resp. 54 montiert ist, die das Wärmerückgewinnungsband 24 leicht gegen die Rolle 47 andrücken, derart, dass in der Längsrichtung des Wärmerückgewinnungsbandes an dieser Stelle praktisch keine Luft durchströmen kann.

Vom Gehäuseteil links im Aussenluftteil kann eine Schlauchverbindung vor den Abluftventilator im Abluftteil vorgesehen werden, mit welcher mittels einer Regulierklappe ein Unterdruck in diesem Gehäuseteil erzeugt werden kann, der etwas grösser ist als jener im Aussenluftteil. Damit kann verhindert werden, dass falsche Abluft in den Aussenluftteil gelangen kann.

Das Wärmerückgewinnungsband 24 kann mittels eines auf die eine oder mehrere Rollen 45, 46 oder 47 wirkenden Motors 59 angetrieben werden. Dieser Motor 59 kann, zwecks Ermöglichung einer Leistungsregulierung, stufenlos über Temperaturfühler und Regler gesteuert werden, indem die Bandgeschwindigkeit verändert wird. Zwecks Entfernung von sich daran eventuell ablagernden Verschmutzungen können im Stahlblechteil 49 oder an anderer adäquater Stelle Bürstenrollen 55, 56 vorgesehen werden, die vorteilhafterweise gegenläufig zum Wärmerückgewinnungsband laufen und den Staub abbürsten und - klopfen. Dadurch gelangt der Staub im Aussenluftteil in den Filter und bei der Abluft wird er direkt ind Freie geblasen.

Der Fachmann erkennt leicht, dass der erfindungsgemässe Monoblock-Klimaschrank, unabhängig davon, ob er mit einem sie hiervor beschriebenen Wärmerückgewinnungsband 24 oder einem anderen Wärmerückgewinnungselement bestückt ist oder ein solches Element gar nicht aufweist, mit allen in herkömmlichen Klimaanlagen üblichen zusätzlichen Einrichtungen bestückt werden. Es ist auch selbstverständlich, dass neben den anhand der Zeichnung beschriebenen Konditionierungselementen 36 - 40 bei Bedarf weitere Konditionierungselemente in den Konditionierungszylinder 25 eingebaut werden können. Genauso ist es auch möglich, diesen mit weniger Elementen zu bestücken, sofern die konkrete Anwendung des Monoblock-Klimaschrankes dies zulässt. Regulierventile und eventuell benötigte Umwälzpumpen für Lufterhitzer und Kühlerelemente können im Freiraum im Zuluftventilatorbereich vertig verrohrt und inklusive allen notwendigen Armaturen eingebaut werden. Dies ermöglicht es, den erfindungsgemässen Monoblock-Klimaschrank anschlussfertig zu liefern, derart, dass der Installateur lediglich noch den Kaltwasseranschluss für die Luftkühler und den Warmwasseranschluss für die Lufterhitzer anzuschliessen braucht.

## Patentansprüche

1. Energie- und raumsparender Monoblock-Klimaschrank mit integrierbarer Wärmerückgewinnung zur Konditionierung von Raumluft, umfassend einen in einen Zuluft- und einen Abluftteil unterteilten Schrank (22) mit Anschlüssen für Aussenluft, Zuluft, Abluft und Fortluft, in welchem Schrank (22) zuluftseitig zumindest ein Luftfilter (36, 37), ein Lufterhitzer (38), ein Luftkühler (39), ein Luftbefeuchter (40) sowie ein Zuluftventilator (23) und abluftseitig ein Abluftventilator (27) sowie ein Verteilzylinder (29) untergebracht sind, dadurch gekennzeichnet, dass sowohl Luftfilter (36, 37) als auch Lufterhitzer (38) und Luftkühler (39) zumindest annähernd zylindrische Form aufweisen und koaxial derart ineinander angeordnet sind, dass sie einen Konditionierungszylinder (25) bilden und dass der Zuluftventilator (23) so angeordnet ist, dass er die zu konditionierende Raumluft aus dem Zylinderinnenraum absaugt, derart, dass diese von aussen nach innen durch den Konditionierungszylinder (25) strömt.

2. Monoblock-Klimaschrank nach Anspruch 1, dadurch gekennzeichnet, dass der Konditionierungszylinder (25) in senkrechter Lage im Schrank (22) angeordnet ist.

3. Monoblock-Klimaschrank nach Anspruch 1, dadurch gekennzeichnet, dass der Luftbefeuchter die Form eines Dampfroheres (40) aufweist, das im Innern des Konditionierungszylinders (25) angeordnet ist.

4. Monoblock-Klimaschrank nach Anspruch 1, dadurch gekennzeichnet, dass er einen Wärmetauscher in Form eines rollenden Wärmerückgewinnungsbandes (24) aufweist, das in einer geschlossenen Schlaufe zwischen dem zuluftseitigen und abluftseitigen Teil des Schrankes (22) umläuft.

5. Monoblock-Klimaschrank nach Anspruch 4, dadurch gekennzeichnet; dass das Wärmerückgewinnungsband (24) aus einem mehrschichtigen Kupfer- oder Aluminiumdrahtgeflecht oder aus Spänen besteht, das unterhalb des Konditionierungszylinders (25) und des Abluftventilators (27) angeordnet ist.

## Claims

1. Energy- and space-saving monobloc air-conditioning cabinet having integrable heat recovery for conditioning room air, comprising a cabinet (22) subdivided into a supply-air part and a vitiated-air part and having connections for outside air, supply air, vitiated air and exhaust air, in which cabinet (22) at least one air filter (36, 37), an air heater (38), an air cooler (39), an air humidifier (40) as well as a supply-air fan (23) are accommodated on the supply-air side and a vitiated-air fan (27) as well as a distributor cylinder (29) are accommodated on the vitiated-air side, characterized in that the air filter (36, 37) as well as the air heater (38) and air cooler (39) have an at least approximately cylindrical form and are arranged coaxially one inside the other in such a way that they form a conditioning cylinder (25), and in that the supply-air fan (23) is arranged in such a way that it draws the room air to be conditioned out of the cylinder interior space in such a way that this room air flows from outside to inside through the conditioning cylinder (25).

2. Monobloc air-conditioning cabinet according to Claim 1, characterized in that the conditioning cylinder (25) is arranged in a perpendicular position in the cabinet (22).

3. Monobloc air-conditioning cabinet according to Claim 1, characterized in that the air humidifier has the form of a steam pipe (40) which is arranged in the interior of the conditioning cylinder (25).

4. Monobloc air-conditioning cabinet according to Claim 1, characterized in that it has a heat exchanger in the form of a rolling heat-recovery belt (24) which circulates in a closed loop between the supply-air-side part and the vitiated-air-side part of the cabinet (22).

5. Monobloc air-conditioning cabinet according to Claim 4, characterized in that the heat-recovery belt (24) consists of a multi-layer copper or aluminium wire mesh or of chips and is arranged under the conditioning cylinder (25) and the vitiated-air fan (27).

## Revendications

1. Armoire de climatisation monobloc, économisant l'énergie et l'espace, avec une récupération de chaleur intégrable pour le conditionnement d'air atmosphérique, comprenant une armoire (22) subdivisée en un compartiment pour l'air entrant et un compartiment pour l'air sortant, avec des raccords pour l'air extérieur, l'air entrant, l'air sortant et l'air d'échappement, armoire (22) dans laquelle sont placés du côté de l'air entrant au moins un filtre à air (36, 37), un réchauffeur d'air (38), un refroidisseur d'air (39), un humidificateur d'air (40) ainsi qu'un ventilateur (23) pour l'air entrant ainsi que du côté de l'air sortant un ventilateur (27) pour l'air sortant ainsi qu'un cylindre de distribution (29), caractérisée en ce qu'aussi bien le filtre à air (36, 37) que le réchauffeur d'air (38) et le refroidisseur d'air (39) présentent une forme au moins approximativement cylindrique et sont disposés coaxialement l'un dans l'autre de telle sorte qu'ils forment un cylindre de conditionnement (25) et en ce que le ventilateur (23) pour l'air entrant est disposé de telle façon qu'il aspire l'air atmosphérique à conditionner hors de l'espace intérieur du cylindre, de telle sorte que celui-ci circule de l'extérieur vers l'intérieur à travers le cylindre de conditionnement (25).

2. Armoire de climatisation monobloc suivant la revendication 1, caractérisée en ce que le cylindre de conditionnement (25) est disposé en position verticale dans l'armoire (22).

3. Armoire de climatisation monobloc suivant la revendication 1, caractérisée en ce que l'humidificateur d'air présente la forme d'un tube de vapeur (40), qui est disposé à l'intérieur du cylindre de conditionnement (25).

4. Armoire de climatisation monobloc suivant la revendication 1, caractérisée en ce qu'elle présente un échangeur de chaleur ayant la forme d'une bande roulante (24) de récupération de chaleur, qui circule en une boucle fermée entre le compartiment pour l'air entrant et le compartiment pour l'air sortant de l'armoire (22).

5. Armoire de climatisation monobloc suivant la revendication 4, caractérisée en ce que la bande de récupération de chaleur (24) se compose d'un treillis à plusieurs couches en fil de cuivre ou d'aluminium ou de copeaux, qui est disposé sous le cylindre de conditionnement (25) et le ventilateur (27) pour l'air sortant.
